(19)

(11) **EP 3 178 667 B1**

(12) **EUROPEAN PATENT SPECIFICATION**

(45) Date of publication and mention of the grant of the patent:
**11.03.2020 Bulletin 2020/11**

(21) Application number: **15830392.5**

(22) Date of filing: **10.06.2015**

(51) Int Cl.:
***B60C 7/10*** *(2006.01)* ***B60C 7/18*** *(2006.01)*
***B60C 7/24*** *(2006.01)* ***B60C 7/26*** *(2006.01)*
***B60C 11/00*** *(2006.01)* ***B60C 11/03*** *(2006.01)*
***B60C 11/04*** *(2006.01)* ***B60B 9/04*** *(2006.01)*
***B60B 9/26*** *(2006.01)*

(86) International application number:
**PCT/JP2015/066757**

(87) International publication number:
**WO 2016/021300 (11.02.2016 Gazette 2016/06)**

(54) **NON-PNEUMATIC TIRE**

LUFTLOSER REIFEN

PNEU NON PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.08.2014 JP 2014163025**

(43) Date of publication of application:
**14.06.2017 Bulletin 2017/24**

(73) Proprietor: **Bridgestone Corporation**
**Tokyo 104-8340 (JP)**

(72) Inventors:
- **TAKAHASHI Narumi**
  **Tokyo 104-8340 (JP)**
- **ABE Akihiko**
  **Tokyo 104-8340 (JP)**

(74) Representative: **Oxley, Robin John George**
**Marks & Clerk LLP**
**15 Fetter Lane**
**London EC4A 1BW (GB)**

(56) References cited:
**EP-A2- 0 245 789**
**WO-A1-2005/063505**
**WO-A1-2010/007636**
**JP-A- H02 182 501**
**JP-A- 2008 302 782**
**JP-A- 2010 036 885**
**JP-A- 2013 039 922**
**JP-A- 2013 086 712**
**JP-A- 2013 112 045**
**JP-A- 2014 083 871**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

[Technical Field]

The present invention relates to a non-pneumatic tire which does not need to be filled with pressurized air when the tire is used.

[Background Art]

The occurrence of a puncture of a pneumatic tire which has an inside thereof filled with pressurized air and is used in a related art is an inevitable problem in terms of a structure thereof.

In order to solve such a problem, in recent years, for example, the non-pneumatic tire disclosed in Patent Document 1 including a mounting body mounted on an axle, a ring-shaped body surrounding the mounting body from an outside in a tire radial direction, a connecting member configured to connect the mounting body and the ring-shaped body so that the mounting body and the ring-shaped body are displaceably connected, and a cylindrical tread member mounted over the ring-shaped body has been suggested.

[Document of Related Art]

[Patent Document]

[Patent Document 1]

Japanese Unexamined Patent Application, First Publication No. 2013-86712.

Reference is also made to JP 2013-112045, which discloses a non-pneumatic tire according to the preamble of Claim 1, and also to WO 2010/007636, EP-A-0245789, JP 2014-083871 and WO 2005/063505.

[Summary of Invention]

[Technical Problem]

However, in the non-pneumatic tire in the related art, portions of a tread member at which local a ground contact pressure is increased occur, and thus the tread member is likely to be subject to uneven wear.

The present invention was made in view of the above-described circumstances, and the present invention is for the purpose of providing a non-pneumatic tire capable of minimizing and equalizing variation of a magnitude of a ground contact pressure occurring at a tread member, and thus capable of suppressing uneven wear of the tread member.

[Solution to Problem]

A non-pneumatic tire of the present invention is defined in Claim 1 and includes: a mounting body mountable on an axle; a ring-shaped body surrounding the mounting body from an outside in a tire radial direction; a connecting member configured to connect the mounting body and the ring-shaped body such that the mounting body and the ring-shaped body are relatively and elastically displaceable; and a cylindrical tread member mounted over the ring-shaped body, wherein the connecting member includes a first connecting plate and a second connecting plate arranged at intervals in the tire width direction, wherein grooves are formed at an outer peripheral surface of a portion of the tread member located above and corresponding to a portion of the ring-shaped body at which the first and second connecting plates are connected, wherein grooves are formed at an outer peripheral surface of a top part of the tread member which is located closest to an outer side in the tire radial direction at a central portion of the tread member in the tire width direction and above a gap between portions of the ring-shaped body at which the first and second connecting plates are connected. A preferred embodiment of the present invention is laid down in the appended dependent claim 2.

[Effects of Invention]

According to a non-pneumatic tire of the present invention, variation of a magnitude of a ground contact pressure occurring at a tread member can be minimized and equalized, and thus uneven wear of the tread member can be limited.

[Brief Description of Drawings]

Fig. 1 is a view showing a reference embodiment of a non-pneumatic tire related to the present invention (but not according to the invention) and is a schematic exploded perspective view in which a portion of the non-pneumatic tire is disassembled.

Fig. 2 is a side view when the non-pneumatic tire shown in Fig. 1 is viewed from a first side in a tire width direction.

Fig. 3 is an enlarged view showing a main part of Fig. 2.

Fig. 4 is a plan view when a connecting member shown in Fig. 3 is viewed from a tire circumferential direction.

Fig. 5 is a perspective view showing a state in which a portion, at which a mounting body of the non-pneumatic tire shown in Fig. 2 is omitted, is cut in the tire width direction.

Fig. 6 is a side view when a first divided case body of the non-pneumatic tire shown in Fig. 1 is viewed from a first side in the tire width direction or a side view when a second divided case body thereof is viewed from a second side in the tire width direction.

Fig. 7 is an enlarged view showing a main part of Fig. 5.

Fig. 8 is a view showing a modified example of a tread member of a non-pneumatic tire which is according to the invention.

Fig. 9 is a view showing another modified example of the tread member of a non-pneumatic tire which is not according to the invention but is useful for understanding the invention.

[Description of Embodiments]

Hereinafter, a reference embodiment related to the present invention (but not according to the invention) will be described with reference to the drawings.

(Reference embodiment)

(Constitution of non-pneumatic tire)

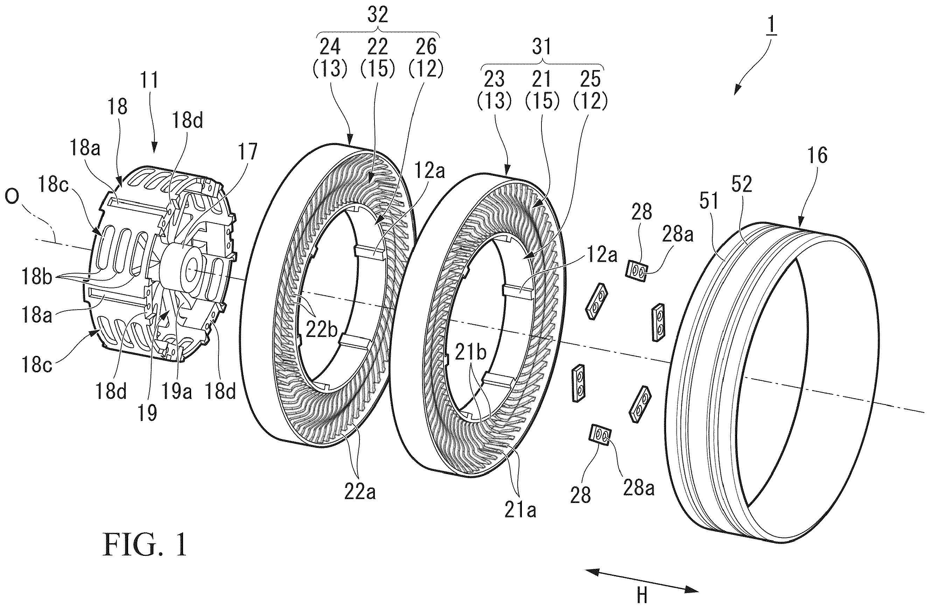

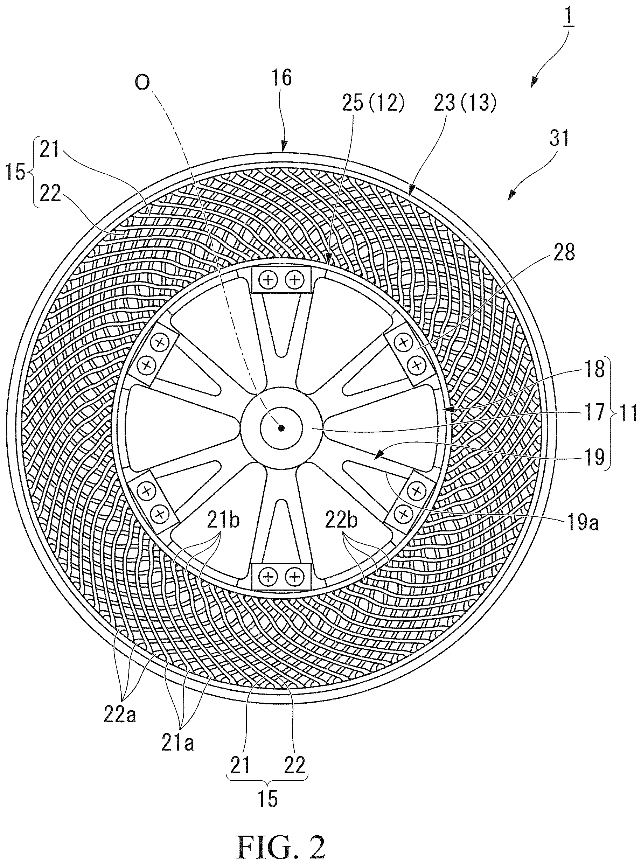

As shown in Figs. 1 and 2, a non-pneumatic tire 1 of this reference embodiment includes a mounting body 11 mounted on an axle (not shown), a cylindrical ring-shaped body 13 surrounding the mounting body 11 from an outside in a tire radial direction, a plurality of connecting members 15 arranged between the mounting body 11 and the ring-shaped body 13 in a tire circumferential direction and configured to connect the mounting body 11 and the ring-shaped body 13 such that the mounting body 11 and the ring-shaped body 13 are relatively and elastically displaceable, and a cylindrical tread member 16 mounted over the ring-shaped body 13.

Note that the non-pneumatic tire 1 of this reference embodiment may be adopted for, for example, a handle type electric wheel chair and the like defined in Japanese Industrial Standards JIS T 9208 and a small vehicle and the like travelling at low speed. Furthermore, a size of the non-pneumatic tire 1 is not particularly limited, but may be, for example, 3.00-8 or the like. The non-pneumatic tire 1 may be adopted for a passenger vehicle. The size thereof in this case is not particularly limited, but may be, for example, 155/65R13 or the like.

The mounting body 11, the ring-shaped body 13, and the tread member 16 are arranged coaxially with a common axis. Hereinafter, the common axis is defined as an axis O, a direction along the axis O is defined as a tire width direction H, a direction perpendicular to the axis O is defined as the tire radial direction, and a direction around the axis O is defined as the tire circumferential direction. Note that the mounting body 11, the ring-shaped body 13, and the tread member 16 are arranged in a state in which central portions thereof coincide with each other in the tire width direction H.

The mounting body 11 includes a mounting cylinder part 17 to which a distal end portion of the axle is mounted, an outer ring part 18 surrounding the mounting cylinder part 17 from an outside in the tire radial direction, and a plurality of ribs 19 configured to connect the mounting cylinder part 17 and the outer ring part 18.

The mounting cylinder part 17, the outer ring part 18, and the ribs 19 are integrally formed of, for example, a metallic material such as an aluminum alloy. The mounting cylinder part 17 and the outer ring part 18 are formed in a cylindrical shape and are arranged to be coaxial with the axis O. The plurality of ribs 19 are disposed, for example, at equal intervals in the circumferential direction.

A plurality of key grooves 18a inwardly concave in the tire radial direction and extending in the tire width direction H are formed at an outer peripheral surface of the outer ring part 18 at intervals in the tire circumferential direction. In the outer peripheral surface of the outer ring part 18, the key grooves 18a are open only at a first side (an outside of a vehicle body) in the tire width direction H and are closed at a second side (an inside of the vehicle body) in the tire width direction H.

A plurality of weight-reducing holes 18b passing though the outer ring part 18 in the tire radial direction are formed at portions of the outer ring part 18, which are located between the key grooves 18a adjacent to each other in the tire circumferential direction, at intervals in the tire width direction H, . A plurality of hole rows 18c constituted by the plurality of weight-reducing holes 18b are formed at intervals in the tire circumferential direction. Similarly, weight-reducing holes 19a passing through the ribs 19 in the tire width direction H are also formed at the ribs 19.

Concave parts 18d into which plate members 28 having through holes 28a formed therein are fitted are formed at positions of an edge of a first side of the outer ring part 18 in the tire width direction H to correspond to the key grooves 18a. The concave parts 18d are concave toward a second side in the tire width direction H. Furthermore, female thread parts communicating with the through holes 28a of the plate members 28 fitted into the concave parts 18d are formed at wall surfaces facing a first side in the tire width direction H among wall surfaces defining the concave parts 18d.

Note that the plurality of through holes 28a are formed at the plate members 28 at intervals in the tire circumferential direction. Similarly, the plurality of female thread parts are formed at the wall surfaces of the concave parts 18d at intervals in the tire circumferential direction. In the shown example, a case in which two through holes 28a and two female thread parts are formed is exemplified, but the numbers of through holes 28a and female thread parts is not limited to two.

A cylindrical exterior body 12 is externally fitted to the mounting body 11. Ridge parts 12a protruding inward in the tire radial direction and extending over an entire length thereof in the tire width direction H are formed at an inner circumferential surface of the exterior body 12. The plurality of ridge parts 12a are formed at the inner circumferential surface of the exterior body 12 at intervals in the tire circumferential direction and are separately engaged with the key grooves 18a formed at the mounting body 11.

Also, the exterior body 12 is fixed to the mounting body 11 by screwing bolts (not shown) through the through holes 28a of the plate members 28 fitted into the concave parts 18d and into the female thread parts in a state in which the ridge parts 12a are engaged with the key grooves 18a.

Note that a pair of a lateral wall surface and a bottom wall surface facing each other in the tire circumferential direction among wall surfaces defining the key grooves 18a are formed such that the pair of the lateral wall surface and the bottom wall surface are orthogonal to each other. Also, a pair of a lateral wall surface rising from the inner circumferential surface of the exterior body 12 and a top wall surface facing inward in the tire radial direction among outer surfaces of the ridge parts 12a are also formed such that the pair of the lateral wall surface and the top wall surface are similarly orthogonal to each other. The sizes of the ridge parts 12a and the key grooves 18a in the tire circumferential direction are the same.

With such a constitution, the ridge parts 12a are precisely fitted into the key grooves 18a so that the ridge parts 12a are engaged with the key grooves 18a with less rattling therein.

The connecting members 15 connect an outer peripheral surface side of the mounting body 11 and an inner circumferential surface side of the ring-shaped body 13 such that the outer peripheral surface side of the mounting body 11 and the inner circumferential surface side of the ring-shaped body 13 are relatively and elastically displaceable. In the shown example, the connecting members 15 include first connecting plates 21 and second connecting plates 22 which connect the outer peripheral surface of the exterior body 12 externally fitted to the mounting body 11 and the inner circumferential surface of the ring-shaped body 13. The first connecting plates 21 and the second connecting plates 22 are plate materials which can be elastically deformed together.

The plurality of first connecting plates 21 are disposed in the tire circumferential direction at positions of the first side in the tire width direction H. The plurality of second connecting plates 22 are disposed in the tire circumferential direction at positions of the second side in the tire width direction H. In other words, the first connecting plates 21 and the second connecting plates 22 are disposed at intervals in the tire width direction H, and the plurality of first connecting plates 21 and the plurality of second connecting plates 22 are disposed in the tire circumferential direction at their respective positions. For example, 60 first connecting plates 21 and 60 second connecting plates 22 are provided in the tire circumferential direction.

The plurality of connecting members 15 are separately disposed at positions between the exterior body 12 and the ring-shaped body 13 to be rotationally symmetrical with respect to the axis O. All of the connecting members 15 are set to be the same shape and size, and a width of the connecting members 15 in the tire width direction H are smaller than a width of the ring-shaped body 13 in the tire width direction H.

Also, the first connecting plates 21 adjacent to each other in the tire circumferential direction are not in contact with each other. Similarly, the second connecting plates 22 adjacent to each other in the tire circumferential direction are not in contact with each other. The first connecting plates 21 and the second connecting plates 22 adjacent to each other in the tire width direction H are not in contact with each other either. The first connecting plates 21 and the second connecting plates 22 have the same width and thickness in the tire width direction H.

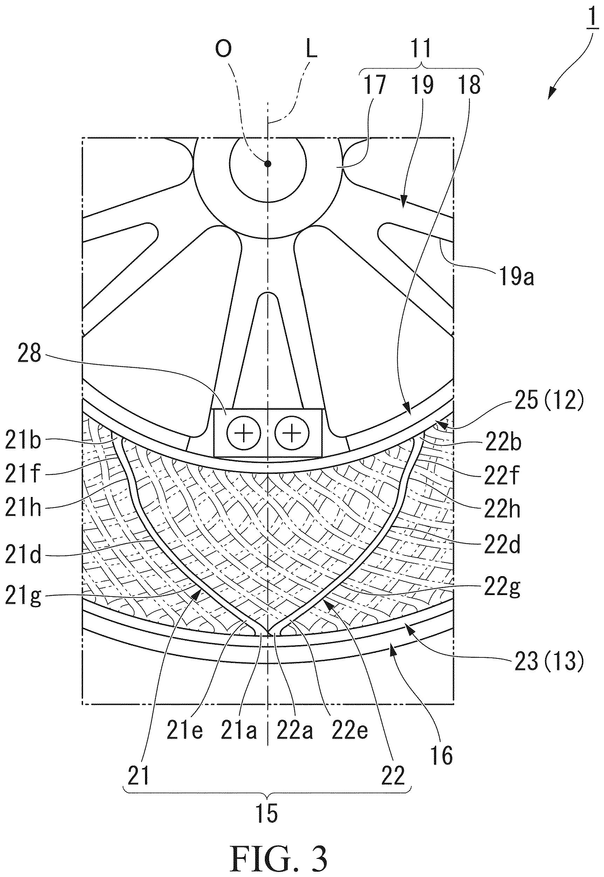

As shown in Fig. 3, first ends (outer ends) 21a of the first connecting plates 21 connected to the ring-shaped body 13 are located closer to first side in the tire circumferential direction than the second ends (inner ends) 21b connected to the exterior body 12. On the other hand, first ends (outer ends) 22a of the second connecting plates 22 connected to the ring-shaped body 13 are located closer to the second side in the tire circumferential direction than the second ends (inner ends) 22b connected to the exterior body 12.

Also, the first ends 21a and 22a of the first connecting plates 21 and the second connecting plates 22 constituting one connecting member 15 are connected at positions of the inner circumferential surface of the ring-shaped body 13 which are different in the tire width direction H but the same in the tire circumferential direction.

A plurality of curved parts 21d to 21f and 22d to 22f curved in the tire circumferential direction are formed at intermediate portions of the first connecting plates 21 and the second connecting plates 22 which are located between the first ends 21a and 22a and the second ends 21b and 22b.

The plurality of curved parts 21d to 21f and 22d to 22f are formed in an extension direction along which the first connecting plates 21 and the second connecting plates 22 extend in a side view of the tire when the non-pneumatic tire 1 is viewed in the tire width direction H. In the shown example, the plurality of curved parts 21d to 21f of the first connecting plates 21 and the plurality of curved parts 22d to 22f of the second connecting plates 22 are adjacent to each other in the above-described extension direction, and curved directions thereof are opposite to each other.

The plurality of curved parts 21d to 21f formed at the first connecting plates 21 have the first curved parts 21d curved to project toward the second side in the tire circumferential direction, the second curved parts 21e located between the first curved parts 21d and the first ends 21a and curved to project toward a first side in the tire circumferential direction, and third curved parts 21f located between the first curved parts 21d and the second ends 21b and curved to project toward the first side in the tire circumferential direction. The second curved parts 21e are continuous with the first ends 21a.

The plurality of curved parts 22d to 22f formed at the second connecting plates 22 have the first curved parts 22d curved to project toward the first side in the tire circumferential direction, the second curved parts 22e located between the first curved parts 22d and the first ends 22a and curved to project toward the second side in the tire circumferential direction, and the third curved parts 22f located between the first curved parts 22d and the second ends 22b and curved to project toward the second side in the tire circumferential direction. The second curved parts 22e are continuous with the first ends 22a.

In the shown example, radii of curvatures of the first curved parts 21d and 22d in the side view of the tire are formed to be larger than those of the second curved parts 21e and 22e and the third curved parts 21f and 22f, and the first curved parts 21d and 22d are disposed at central portions in extension directions of the first connecting plates 21 and the second connecting plates 22.

Lengths of the first connecting plates 21 and the second connecting plates 22 are the same. The second ends 21b and 22b of the first connecting plates 21 and the second connecting plates 22 are separately connected from positions of the outer peripheral surface of the exterior body 12 which are opposite to the first ends 21a and 22a in the tire radial direction to positions of the first side and the second sides about the axis O which are the same distance away from the axis O in the tire circumferential direction in the side view of the tire.

To be specific, the second ends 21b and 22b of the first connecting plates 21 and the second connecting plates 22 are connected to the outer peripheral surface of the exterior body 12 such that angles formed by lines connecting the first ends 21a and the second ends 21b of the first connecting plates 21 and lines connecting the first ends 22a and the second ends 22b of the second connecting plates 22 have, for example, angles of 20° or more and 135° or less.

Also, directions in which the first curved parts 21d and 22d, the second curved parts 21e and 22e, and the third curved parts 21f and 22f of the first connecting plates 21 and the second connecting plates 22 project in the tire circumferential direction are opposite, and sizes thereof are the same.

With such a constitution, as shown in Fig. 3, in the case of shapes of the connecting members 15 in the side view of the tire, the connecting members 15 extend in the tire radial direction and are line symmetrical using an imaginary line L passing through the first ends 21a and 22a of the first connecting plates 21 and the second connecting plates 22 as an axis of symmetry.

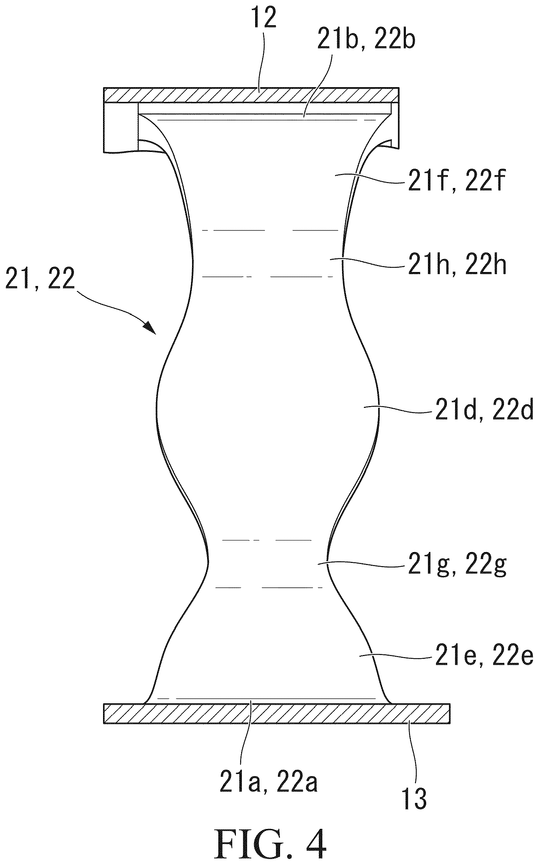

Note that, as shown in Fig. 4, inflection parts 21g, 21h, 22g, and 22h are formed at portions of the first connecting plates 21 and the second connecting plates 22 which are located between the curved parts 21d to 21f and 22d to 22f adjacent to each other in the extension directions of the connecting plates 21 and 22.

Areas of cross sections (cross-sectional areas) of the inflection parts 21g, 21h, 22g, and 22h in the first connecting plates 21 and the second connecting plates 22, which are orthogonal in the extension directions thereof, are formed to be smaller than those of other regions, and the inflection parts 21g, 21h, 22g, and 22h are located in boundary regions of the curved parts 21d to 21f and 22d to 22f adjacent to each other in the extension directions of the connecting plates 21 and 22.

In the shown example, the cross-sectional areas of the first connecting plates 21 and the second connecting plates 22 are formed to gradually decrease toward the inflection parts 21g, 21h, 22g, and 22h in the extension directions.

The exterior body 12, the ring-shaped body 13, and the plurality of connecting members 15, which have been described above, are integrally formed of, for example, a synthetic resin material. As the synthetic resin material, for example, only one type of a resin material, a mixture including two or more types of resin materials, or a mixture including one or more types of resin materials and one or more types of elastomers may be provided, and for example, an additive such as an antioxidant, a plasticizer, a filler, or a pigment may be further provided.

However, as shown in Fig. 1, the exterior body 12 is divided into a first exterior body 25 located at the first side in the tire width direction H and a second exterior body 26 located at the second side in the tire width direction H. Similarly, the ring-shaped body 13 is divided into a first ring-shaped body 23 located at the first side in the tire width direction H and a second ring-shaped body 24 located at the second side in the tire width direction H.

In the shown example, the exterior body 12 and the ring-shaped body 13 are divided at a central portion in the tire width direction H.

The first exterior body 25 and the first ring-shaped body 23 are integrally formed with the first connecting plates 21 using, for example, injection molding. The second exterior body 26 and the second ring-shaped body 24 are integrally formed with the second connecting plates 22 using, for example, injection molding.

Hereinafter, a unit in which the first exterior body 25, the first ring-shaped body 23, and the first connecting plates 21 are integrally formed is referred to as a first divided case body 31, and a unit in which the second exterior body 26, the second ring-shaped body 24, and the second connecting plates 22 are integrally formed is referred to as a second divided case body 32.

Note that, as the injection molding, if the first divided case body 31 is exemplified, a general method in which the entire first divided case body 31 is formed at the same time, insert molding in which a portion of the first exterior body 25, the first ring-shaped body 23, and the first connecting plates 21 is set as an insert article and the remaining portion is subject to injection molding, so-called two color molding, and the like may be adopted. Note that, when the entire first divided case body 31 is subject to injection molding at the same time, the plurality of ridge parts 12a formed at the exterior body 12 may be set as gate parts.

With regard to these points, the same applies to the second divided case body 32.

At a time of the injection molding, if the first divided case body 31 is exemplified, the first exterior body 25, the first ring-shaped body 23, and the first connecting plates 21 may be formed of different materials or may be formed of the same material. Examples of the material include a metallic material, a resinous material, and the like. However, a resinous material, particularly, a thermoplastic resin, is preferable from the viewpoint of weight reduction. With regard to these points, the same applies to the second divided case body 32.

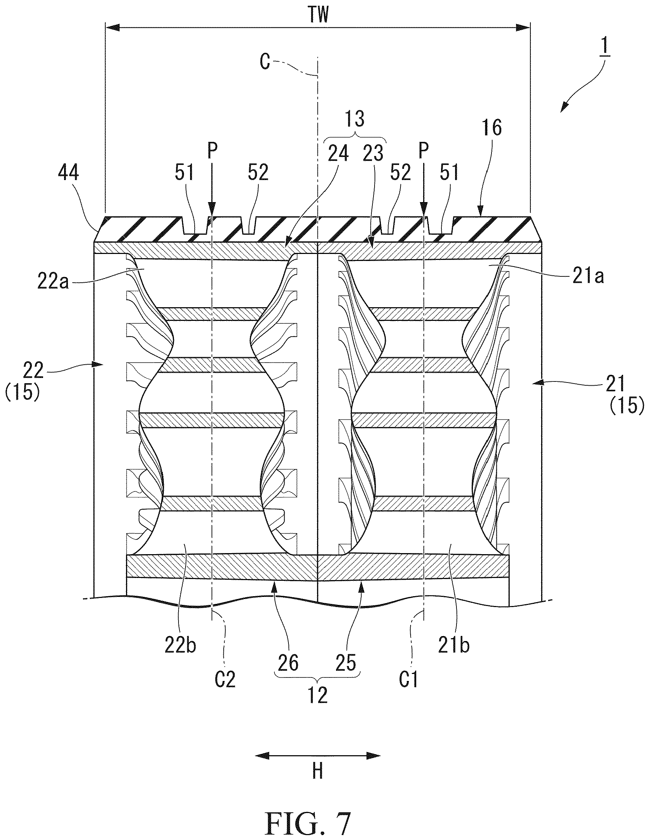

As shown in Fig. 7, central portions (a first connecting plate central plane C1 and a second connecting plate central plane C2) of the first connecting plates 21 and the second connecting plates 22 in the tire width direction H in the first divided case body 31 and the second divided case body 32 (central sides) are located further inward in the tire width direction H than central portions of the first ring-shaped body 23 and the second ring-shaped body 24 in the tire width direction H. Furthermore, central portions of the first exterior body 25 and the second exterior body 26 in the tire width direction H are located further inward in the tire width direction H than the central portions (the first connecting plate central plane C1 and the second connecting plate central plane C2) of the first connecting plates 21 and the second connecting plates 22 in the tire width direction H.

Here, the reference embodiment is not limited thereto. In addition, at least two or more central portions of the central portions (the first connecting plate central plane C1 and the second connecting plate central plane C2) of the first connecting plates 21 and the second connecting plates 22 in the tire width direction H, the central portions of the first ring-shaped body 23 and the second ring-shaped body 24 in the tire width direction H, and the central portions of the first exterior body 25 and the second exterior body 26 in the tire width direction H may coincide with each other in the first divided case body 31 and the second divided case body 32.

Note that the above-described first connecting plate central plane (a connecting member central plane) C1 is a virtual plane passing through the centers of the first connecting plates 21 in the tire width direction H and orthogonal to the axis O in a cross-sectional view in the tire width direction H shown in Fig. 7, and the above-described second connecting plate central plane (a connecting member central plane) C2 is a virtual plane passing through the centers of the second connecting plates 22 in the tire width direction H and orthogonal to the axis O in the cross-sectional view in the tire width direction H.

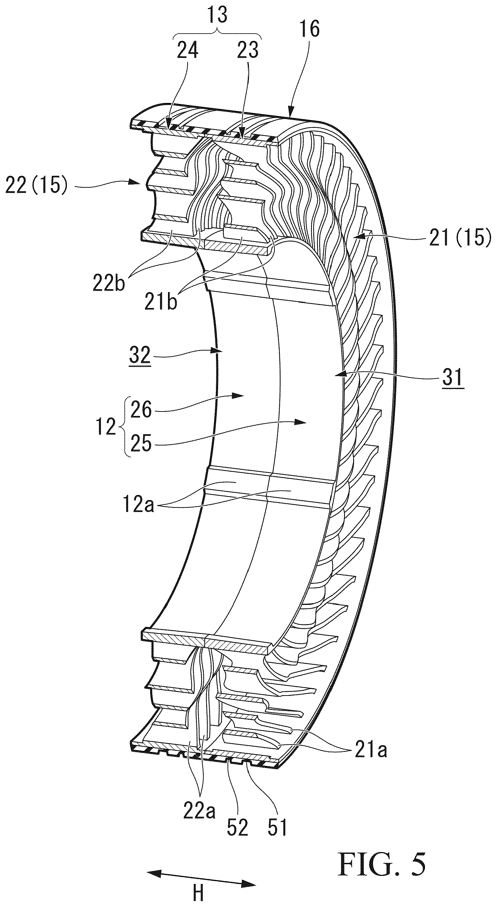

As shown in Fig. 5, edges of the first ring-shaped body 23 and the second ring-shaped body 24 which face each other in the tire width direction H are connected using, for example, welding, fusing, adhering, or the like. Note that, in the case of welding, for example, hot plate welding or the like may be adopted. Similarly, edges of the first exterior body 25 and the second exterior body 26 which face each other in the tire width direction H are in contact with each other.

Here, the first exterior body 25 and the second exterior body 26 may be formed to be smaller in width in the tire width direction H than those of the first ring-shaped body 23 and the second ring-shaped body 24.

In this case, the edges of the first exterior body 25 and the second exterior body 26 which face each other in the tire width direction H are separated in the tire width direction H at a time at which the first divided case body 31 and the second divided case body 32 are connected. Therefore, for example, a burr can be prevented from being generated at the inner circumferential surface of the exterior body 12 externally fitted to the mounting body 11.

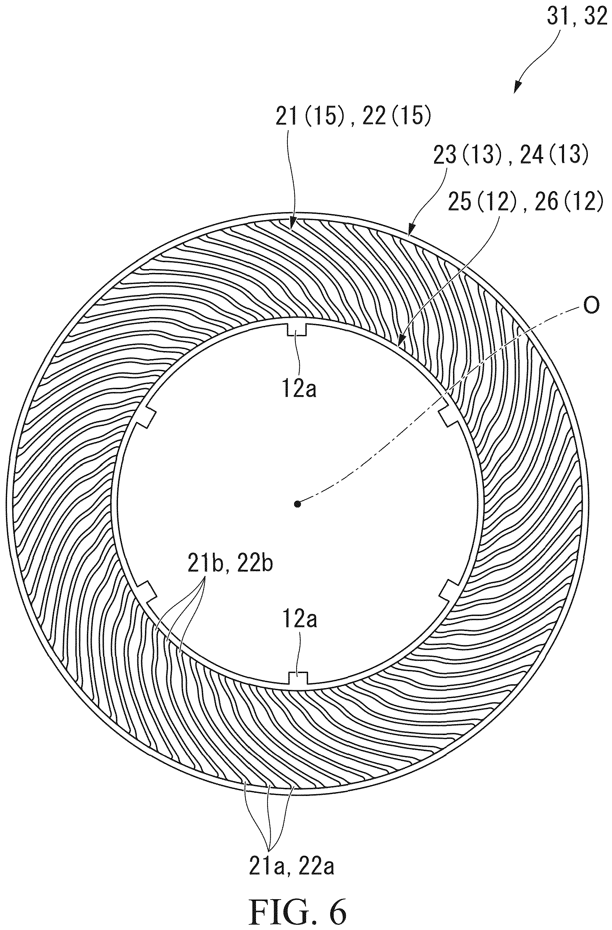

As shown in Fig. 6, the first divided case body 31 and the second divided case body 32 have the same shape and size. Also, when the first divided case body 31 and the second divided case body 32 are integrally connected as described above, the edges of the first ring-shaped body 23 and the second ring-shaped body 24 in the tire width direction H abut and are connected in a state in which directions of the first divided case body 31 and the second divided case body 32 are opposite to each other while the first divided case body 31 and the second divided case body 32 are aligned in the tire circumferential direction such that the connecting members 15 are line symmetrical in the side view of the tire as described above.

After that, the non-pneumatic tire 1 can be obtained by providing the tread member 16 to the first divided case body 31 and the second divided case body 32 which are integrally combined.

As shown in Fig. 5, the tread member 16 is formed in a cylindrical shape and integrally covers an outer peripheral surface side of the ring-shaped body 13 over the entire area thereof. The tread member 16 is formed of, for example, vulcanized rubber in which natural rubber and/or a rubber composition are/is vulcanized, a thermoplastic material, or the like.

Examples of the thermoplastic material include a thermoplastic elastomer, a thermoplastic resin, and the like. Examples of the thermoplastic elastomer include an amide-based thermoplastic elastomer (TPA), an ester-based thermoplastic elastomer (TPC), an olefin-based thermoplastic elastomer (TPO), a styrene-based thermoplastic elastomer (TPS), a urethane-based thermoplastic elastomer (TPU), a crosslinked thermoplastic rubber (TPV), another thermoplastic elastomer (TPZ), and the like which are defined in Japanese Industrial Standards JIS K6418.

Examples of the thermoplastic resin include urethane resins, olefin resins, vinyl chloride resins, polyamide resins, and the like. Note that the tread member 16 is preferably formed of vulcanized rubber from the viewpoint of wear resistance.

The tread member 16 will be described in detail.

An outer peripheral surface of the tread member 16 is formed in a linear shape (a flat shape) parallel to the axis O in a cross-sectional view in the tire width direction H shown in Fig. 7. In other words, the outer peripheral surface of the tread member 16 has a cylindrical surface shape about the axis O when the entire non-pneumatic tire 1 is viewed. Note that an inner circumferential surface of the tread member 16 is in close contact with the outer peripheral surface of the ring-shaped body 13 over the entire area thereof.

In this reference embodiment, the outer peripheral surface of the tread member 16 passes through the center of the tread member 16 in the tire width direction H in the cross-sectional view in the tire width direction H and is formed to be line symmetrical with respect to (about) a central plane (a central plane of the tire) C serving as a virtual plane orthogonal to the axis O. Furthermore, the outer peripheral surface of the tread member 16 is formed to be plane symmetrical with respect to the central plane C when the entire non-pneumatic tire 1 is viewed.

Here, the outer peripheral surface of the tread member 16 refers to a surface facing an outside of the tread member 16 in the tire radial direction. Furthermore, a portion of the outer peripheral surface of the tread member 16 that comes into contact with a road surface is a tread. Surfaces of the outer peripheral surface of the tread member 16 in the tire width direction H which are located further outward in the tire width direction H than outer edges (shoulder edges) thereof are side surfaces 44 configured to connect the outer peripheral surface of the tread member 16 and the ring-shaped body 13 and not serving as a tread.

The side surfaces 44 in the shown example incline gradually inward in the tire width direction H as they go outward in the tire radial direction. Therefore, the entire tread member 16 is within an inner side of the ring-shaped body 13 in the tire width direction H. In other words, the outer edges (portions of the side surfaces 44 which are located at outer sides in the tire radial direction) of the tread member 16 in the tire width direction H are the same as the outer edges of the ring-shaped body 13 in the tire width direction H at positions in the tire width direction H. Therefore, the tread member 16 does not protrude more toward the outer sides in the tire width direction H than the ring-shaped body 13.

Note that shapes of the side surfaces 44 are not limited to inclined surfaces. In addition, for example, the shapes may be curved surfaces or may be vertical surfaces extending in the tire radial direction and orthogonal to the axis O.

Also, grooves 51 and 52 that are concave from the outer peripheral surface are formed at an outer peripheral surface of a portion located above and corresponding to a portion of the tread member 16 at which the ring-shaped body 13 and the connecting member 15 are connected. In this reference embodiment, the plurality of grooves 51 and 52 extend in the outer peripheral surface of the tread member 16 in the tire circumferential direction and are formed at the outer peripheral surface of the tread member 16 at intervals in the tire width direction H.

In the example of Fig. 7, the plurality of grooves 51 and 52 are formed at an outer peripheral surface of a portion of the tread member 16 which is located above and corresponding to a portion of the ring-shaped body 13 at which the first and second connecting plates 21 and 22 are connected.

Groove depths of the grooves 51 and 52 in the tire radial direction are the same, and groove widths thereof in the tire width direction H are different. In the shown example, the groove width of the grooves 51 located at the outer sides in the tire width direction H among the grooves 51 and 52 is larger than the groove width of the grooves 52 located at the inner side in the tire width direction H.

Also, the groove widths of the grooves 51 and 52 gradually increase from groove bottoms toward opening sides (that is, outward in the tire radial direction) of the grooves. To be specific, a pair of lateral walls (inner walls of the grooves) of the grooves 51 and 52 are formed as inclined surfaces which are gradually separated in the tire width direction H from the groove bottoms toward the opening sides of the grooves.

Here, an arrow represented by reference symbol P in Fig. 7 indicates a point at which a ground contact pressure occurring at the tread member 16 is maximized when the grooves 51 and 52 are not formed at the tread member 16.

In this reference embodiment, the outer peripheral surface of the tread member 16 has a flat shape (a cylindrical surface shape) of which an outer diameter does not change over the entire area in the tire width direction H. Thus, the number of maximum points P is two, that is, a position passing through the centers of the first connecting plates 21 in the tire width direction H and located above the central plane (the first connecting plate central plane) C1 orthogonal to the axis O and a position passing through the centers of the second connecting plates 22 in the tire width direction H and located above the central plane (the second connecting plate central plane) C2.

Also, positions of the grooves 51 and 52 in the tire width direction H in the outer peripheral surface of the tread member 16 are set to correspond to the maximum points P (hereinafter simply referred to as "points P" in some cases) of the ground contact pressure occurring at the tread member 16.

In this reference embodiment, even sets of grooves 51 and 52 are formed at the outer peripheral surface of the portion of the tread member 16 which is located above and corresponding to the portion of the ring-shaped body 13 at which the first and second connecting plates 21 and 22 are connected. In addition, the grooves 51 and 52 are disposed to be shifted from positions above the points P in the tire width direction H to surround the points P (the first connecting plate central plane C1 and the second connecting plate central plane C2 in this reference embodiment) in the tire width direction H. Here, the reference embodiment is not limited thereto. In addition, any of the grooves 51 and 52 may be disposed above the points P.

Note that, in the shown example, the grooves 51, which have a relatively larger groove width, of the plurality of grooves 51 and 52, which are provided at the outer peripheral surface of the corresponding portion, are disposed closer to the points P than the grooves 52, which have a relatively smaller groove width.

The number, shapes, and disposition of the grooves 51 and 52 provided in the outer peripheral surface of the tread member 16 are not limited to the number, the shapes, and the disposition described in this reference embodiment. For example, only one set of grooves 51 and 52 may be provided in the outer peripheral surface of the corresponding portion of the tread member 16, or three or more sets of grooves 51 and 52 may be provided. Note that, when odd sets of grooves 51 and 52 are provided in the outer peripheral surface of the corresponding portion, grooves located at centers in the tire width direction H among the grooves 51 and 52 are preferably disposed at positions above the points P in some cases. In other words, for example, when three sets of grooves 51 and 52 are provided in the outer peripheral surface of the corresponding portion at intervals in the tire width direction H, a set of grooves 51 and 52 located at a center among the three sets of grooves 51 and 52 are preferably disposed at positions above the points P in some cases. Here, also in this case, the grooves 51 and 52 may not be disposed above the points P.

The ratio of a total sum of the groove widths of the plurality of grooves 51 and 52 to a total width (a full width in the tire width direction H) TW of the outer peripheral surface of the tread member 16 is preferably within a range of 1/0 to 2/5.

(Action of non-pneumatic tire)

According to the non-pneumatic tire 1 constituted as described above, since the grooves 51 and 52 are formed at the outer peripheral surface of the corresponding portion of the tread member 16 in which the ground contact pressure is larger than an average ground contact pressure (a value obtained by dividing a load imposed on the tire by a ground contact area), the ground contact pressure occurring at such a portion can be reduced, and thus uneven wear of the tread member 16 can be limited.

In other words, the grooves 51 and 52 are formed so that the ground contact pressure is distributed to a portion other than the grooves 51 and 52 of the tread member 16, and thus variation of a magnitude of the ground contact pressure occurring at the tread member 16 is limited and the ground contact pressure is equalized. For this reason, an increase in a localized ground contact pressure of the tread member 16 is minimized, and thus uneven wear of the tread member 16 is limited.

In this reference embodiment, since the ratio of the total sum of the groove widths of the plurality of grooves 51 and 52 to the total width TW of the outer peripheral surface of the tread member 16 is 1/10 to 2/5, the ground contact pressure occurring at the tread member 16 can be efficiently distributed in the tire width direction H and is limited so that the ground contact pressure of the tread member 16 becomes too high as a whole (the average ground contact pressure becomes too large), and thus the tread member 16 is worn out early.

To be specific, an effect in which the ground contact pressure of the tread member 16 is distributed through the grooves 51 and 52 is not easily obtained when the ratio is less than 1/10, and thus uneven wear is likely to occur.

Also, the ground contact area of the tread member 16 is not easily sufficiently secured and the average ground contact pressure becomes large when the ratio is more than 2/5, and thus the tread member 16 is likely to be worn out early.

(Embodiment according to the invention)

In the above-described reference embodiment, the outer peripheral surface of the tread member 16 may be formed in a shape protruding outward in the tire radial direction in the cross-sectional view in the tire width direction H.

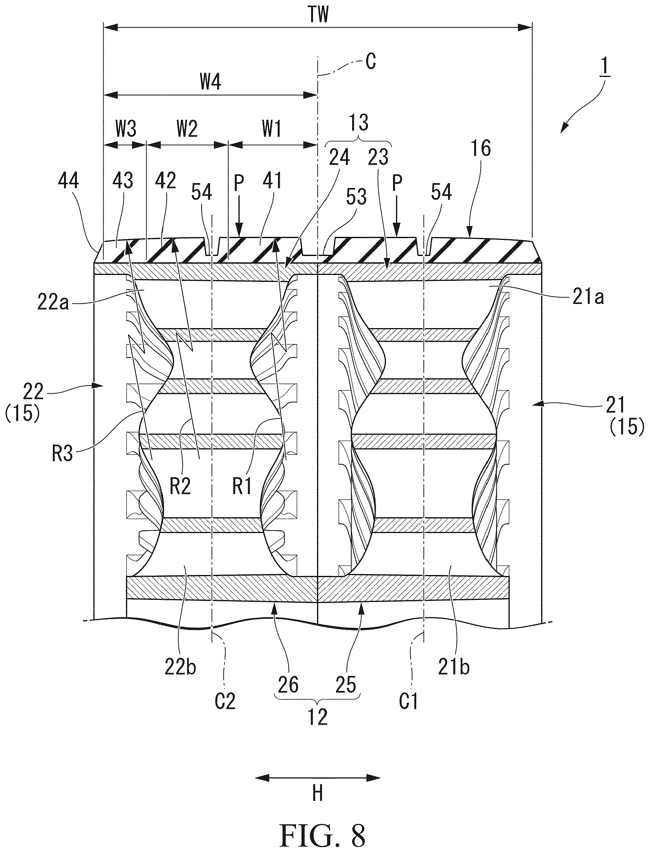

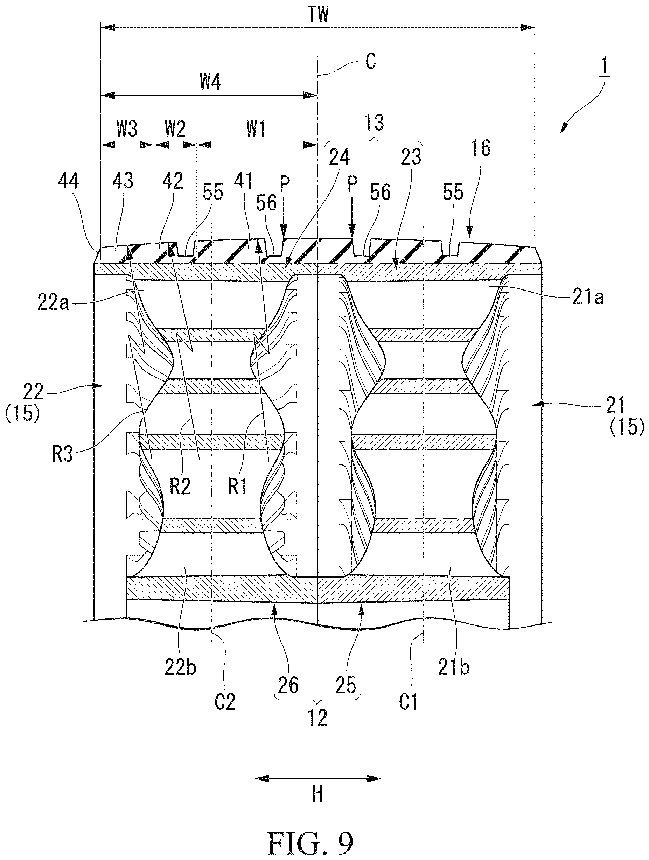

Fig. 8 shows an embodiment according to the invention and Fig. 9 shows a modified example of the reference embodiment which is not according to the invention but is useful for understanding the invention.

As shown in Figs. 8 and 9, a plurality of curved surface parts 41 to 43 of an outer peripheral surface of a tread member 16 are connected to each other in a tire width direction H with no step therebetween and are formed in shapes protruding outward in a tire radial direction in a cross-sectional view in the tire width direction H. To be specific, the outer peripheral surface of the tread member 16 is formed in a curved surface shape formed to project outward in the tire radial direction when an entire non-pneumatic tire 1 is viewed.

The outer peripheral surface of the tread member 16 is constituted of three curved surface parts: central curved surface parts 41 located at central portions in the tire width direction H, shoulder curved surface parts 43 located at outer sides in the tire width direction H, and intermediate curved surface parts 42 located between the central curved surface parts 41 and the shoulder curved surface parts 43.

The central curved surface parts 41, the shoulder curved surface parts 43, and the intermediate curved surface parts 42 are formed to have different radii of curvatures R1 to R3 in the cross-sectional view in the tire width direction H, and virtual circles, which form portions (circular arcs) of circumferences, of the curved surface parts 41 to 43 are in contact with each other (inscribed or circumscribed) at portions at which the curved surface parts 41 to 43 are connected to each other. In other words, the circular arcs, which pass through the connection portions, of the curved surface parts 41 to 43 adjacent to each other in the tire width direction H at connection portions have common tangents at the connection portions in the cross-sectional view in the tire width direction H.

As described above, since the central curved surface parts 41, the shoulder curved surface parts 43, and the intermediate curved surface parts 42 are connected to each other in the tire width direction H with no step therebetween, as shown in Figs. 8 and 9, the outer peripheral surface of the tread member 16 can be smoothly and continuously curved, and the entire outer peripheral surface can reliably come into contact with the ground.

Note that, although radius of the curvature R1 of the central curved surface parts 41, the radius of the curvature R2 of the intermediate curved surface parts 42, and the radius of the curvature R3 of the shoulder curved surface parts 43 have different radii of curvatures, as shown in Fig. 8, the radius of the curvature R2 of the intermediate curved surface parts 42 is the largest and the radius of the curvature R3 of the shoulder curved surface parts 43 is the smallest. In the example shown in Fig. 9 (not according to the invention), the radius of the curvature R3 of the shoulder curved surface parts 43 is the largest and the radius of the curvature R1 of the central curved surface parts 41 is the smallest.

If a length in the tire width direction H from a central plane C to a portion at which one of the central curved surface parts 41 and one of the intermediate curved surface parts 42 are connected is set to be a central length W1, the length in the tire width direction H from the portion at which the central curved surface part 41 and the intermediate curved surface part 42 are connected to a portion at which the intermediate curved surface part 42 and one of the shoulder curved surface parts 43 are connected is set to be an intermediate length W2, a length in the tire width direction H from the portion at which the intermediate curved surface part 42 and the shoulder curved surface part 43 are connected to a portion at which the shoulder curved surface part 43 and one of the side surfaces 44 are connected is set to be a shoulder length W3, and a length in the tire width direction H from the central plane C to the portion at which the shoulder curved surface part 43 and the side surface 44 are connected is set to be an overall length W4, as shown in Fig. 8, the intermediate length W2 is the largest and the shoulder length W3 is the smallest. Here, the intermediate length W2 and the central length W1 are substantially the same. In the example shown in Fig. 9 (not according to the invention), the central length W1 is the largest and the intermediate length W2 is the smallest. Here, the intermediate length W2 and the shoulder length W3 are substantially the same.

In Figs. 8 and 9, the central length W1 is 2/3 or less the overall length W4.

Note that, although description is provided with respect to only half a region of the tread member 16 using the central plane C as a boundary in Figs. 8 and 9, the same applies to the entire region of the tread member 16 with regard to a relationship between the above-described lengths.

In other words, a distance (the above-described central length W1) in the tire width direction H between the central plane C and an outer end (a first outer end) of the central curved surface part 41 in the tire width direction H is 2/3 or less of a distance (the above-described overall length W4) in the tire width direction H between the central plane C and an outer end (a second outer end) of the shoulder curved surface part 43 in the tire width direction H as in Figs. 8 and 9.

Note that the above-described first outer end corresponds to the portion at which the central curved surface part 41 and the intermediate curved surface part 42 are connected. The above-described second outer end corresponds to the portion at which the shoulder curved surface part 43 and the side surface 44 are connected.

In the embodiment shown in Fig. 8, grooves 53 are formed at an outer peripheral surface of a top part of the tread member 16 which is located closest to an outer side in the tire radial direction (a top part of the tread member 16 of which an outer diameter is maximal). To be specific, the above-described top part is located at a central portion of the tread member 16 in the tire width direction H. Note that, in the shown embodiment, the grooves 53 are formed at an outer peripheral surface of a portion of the tread member 16 which is located above a gap between portions of the ring-shaped body 13 at which the first and second connecting plates 21 and 22 are connected.

In the embodiment shown in Fig. 8, grooves 54 are formed at an outer peripheral surface of a portion of the tread member 16 which is located above and corresponding to a portion of the ring-shaped body 13 at which the first and second connecting plates 21 and 22 are connected. In the shown example, the grooves 54 are located above each of the first connecting plate central plane C1 and the second connecting plate central plane C2.

The grooves 53 and 54 of the tread member 16 have different groove depths in the tire radial direction and different groove widths in the tire width direction H. To be specific, positions of groove bottoms in the grooves 53 and 54 in the tire radial direction are the same, whereas positions of openings of the grooves in the tire radial direction are different. For this reason, the groove depth of the grooves 53 is slightly deeper than the groove depth of the grooves 54. Furthermore, the groove width of the grooves 53 located at the central portions in the tire width direction H among the grooves 53 and 54 is larger than the groove width of the grooves 54 located at outer sides in the tire width direction H.

The outer peripheral surface of the tread member 16 is formed in a shape protruding outward in the tire radial direction in the cross-sectional view in the tire width direction H. Thus, maximum points P of a ground contact pressure at the tread member 16 are disposed further inward in the tire width direction H than the first connecting plate central plane C1 and further inward in the tire width direction H than the second connecting plate central plane C2.

Note that amounts of displacement by which the points P are displaced further inward in the tire width direction H than the first and second connecting plate central planes C1 and C2 correspond to a rectangle rate of the outer peripheral surface of the tread member 16.

Here, "a rectangle rate" will be defined below. In other words, if a ground contact length in the tire circumferential direction above a tire equator is set to be Lc and ground contact lengths in the tire circumferential direction at positions directed toward the outer sides in the tire width direction H and 40% of a magnitude of a maximum ground contact width away from the tire equator are set to be La and Lb in a tread of the tread member 16 coming into contact with the ground when the non-pneumatic tire 1 is statically placed on a flat road surface under normal conditions, a rectangle rate of a ground contact shape of the tread is represented by the following expression.

$$\text{Rectangle rate} = 100 \times (La + Lb)/2/Lc$$

Also, the amounts of displacement of the points P are increased when the rectangle rate is decreased.

In the example shown in Fig. 9, a plurality of grooves 55 and 56 are formed at the outer peripheral surface of the portion of the tread member 16 which is located above and corresponding to the portion of the ring-shaped body 13 at which the first and second connecting plates 21 and 22 are connected. In the shown example, the grooves 55 of the grooves 55 and 56 are disposed further outward in the tire width direction H than the first and second connecting plate central planes C1 and C2, and the grooves 56, which have deeper groove depths than the grooves 55, are disposed further inward in the tire width direction H than the first and second connecting plate central planes C1 and C2. Furthermore, groove widths of the grooves 55 and 56 are the same.

A rectangle rate of the tread member 16 of the non-pneumatic tire 1 shown in Fig. 9 is smaller than a rectangle rate of the tread member 16 of the non-pneumatic tire 1 shown in Fig. 8. For this reason, the points P in Fig. 9 are located further inward in the tire width direction H than the points P in Fig. 8.

Also in the case of the non-pneumatic tire 1 constituted in this way, since the grooves 53 to 56 are formed at the outer peripheral surface of the portion located above and corresponding to the portion of the tread member 16 at which the ring-shaped body 13 and the connecting members 15 are connected, the same action and effect as in the above-described action and effect can be obtained.

In the embodiment shown in Fig. 8, since the grooves 53 are formed at the outer peripheral surface of the portion of the tread member 16 which is located above the gap between the portions of the ring-shaped body 13 at which the first and second connecting plates 21 and 22 are connected, gap of the ring-shaped body 13 of which strength is lower than that of other portions does not come into contact with the ground via the tread member 16, and thus a load applied to the gap can be minimized and durability of the non-pneumatic tire 1 (the ring-shaped body 13) can be improved.

Note that, as shown in Fig. 8, when the outer peripheral surface of the tread member 16 is formed in a shape protruding outward in the tire radial direction in the cross-sectional view in the tire width direction H, the ground contact pressure of the top part of the tread member 16 which is located closest to the outside in the tire radial direction easily becomes larger than the average ground contact pressure, but the grooves 53 are formed at the outer peripheral surface of the top part so that the ground contact pressure occurring at this portion can be reduced or uneven wear of the tread member 16 can be limited.

When the radius of the curvature R2 of the intermediate curved surface part 42 among the plurality of curved surface parts 41, 42, and 43 constituting the outer peripheral surface of the tread member 16 is the largest, the thickness of the central curved surface part 41 can be prevented from being excessively increased, and the central curved surface part 41 can be prevented from protruding significantly outward in the tire radial direction. Therefore, rigidity of the central curved surface part 41 can be prevented from decreasing, and thus manipulability can be improved and stability can be achieved.

When the central curved surface part 41 is located at the central portion of the outer peripheral surface of the tread member 16 in the tire width direction H and is connected to the intermediate curved surface part 42, which have the largest radius of curvature with no step, the central curved surface part 41 can project further outward in the tire radial direction than when the outer peripheral surface of the tread member 16 is formed to be flat in the cross-sectional view in the tire width direction H.

Therefore, since the central curved surface part 41 can actively come into contact with the ground and secure the ground contact length, a straight traveling stability is improved and manipulability is further improved. Furthermore, since a driver’s reaction in the vicinity of neutral of a handle can be improved, for example, when a vehicle is steered, the manipulability can be stabilized.

Note that the technical scope of the present invention is not limited to the above described embodiment, and various modifications are possible without departing from the scope of the present invention as defined in the appended claims.

Although a constitution in which one first connecting plate 21 and one second connecting plate 22 are provided as the connecting member 15 is shown in the reference embodiment, a plurality of first connecting plates 21 and a plurality of second connecting plates 22 may instead be provided at different positions of one connecting member 15 in the tire width direction H. The plurality of connecting members 15 are provided between the exterior body 12 and the ring-shaped body 13 in the tire width direction H.

Unlike the reference embodiment, for example, the second ends 21b and 22b of the first connecting plates 21 and the second connecting plates 22 may be separately connected to positions of the outer peripheral surface of the exterior body 12 which surround the axis O in the tire radial direction and are opposite to each other, or may be connected to positions or the like of the outer peripheral surface of the exterior body 12 which are opposite to the first ends 21a and 22a of the first connecting plates 21 and the second connecting plates 22 in the tire radial direction. Furthermore, unlike the reference embodiment, the first ends 21a and 22a of the first connecting plates 21 and the second connecting plates 22 may be connected to different positions of the inner circumferential surface of the ring-shaped body 13 in the tire circumferential direction.

Also, in the reference embodiment, a gap may or may not be provided between the first exterior body 25 and the second exterior body 26 in the tire width direction H. The exterior body 12 and the ring-shaped body 13 may or may not be divided into three or more pieces in the tire width direction H.

Although the exterior body 12 or 61, the ring-shaped body 13 or 62, and the connecting member 15 or 63 are formed integrally using, for example, injection molding in the above-described embodiments, the present invention is not limited to injection molding, and the exterior body 12 or 61, the ring-shaped body 13 or 62, and the connecting member 15 or 63 may be formed integrally using, for example, casting or the like. Furthermore, the exterior body 12 or 61, the ring-shaped body 13 or 62, and the connecting member 15 or 63 may be connected to each other after being individually formed.

The exterior body 12 or 61 and the mounting body 11 may be formed integrally. In other words, the exterior body 12 or 61 may be included in the mounting body 11.

Although the connecting member 15 or 63 is indirectly connected to the mounting body 11 via the exterior body 12 or 61 in the above-described embodiments, the present invention is not limited thereto, and may be, for example, constituted to directly connect the connecting member 15 or 63 to the mounting body 11.

The present invention is not limited to the above described embodiment, and is only limited by the scope of the appended claims.

[Industrial Applicability]

According to the present invention, variation of a magnitude of a ground contact pressure occurring at a tread member can be minimized and equalized. Thus, a non-pneumatic tire which suppresses uneven wear of a tread member can be provided.

[Reference Signs List]

1, 60 Non-pneumatic tire
11 Mounting body
13, 62 Ring-shaped body
15, 63 Connecting member
16 Tread member
21 First the connecting plate
22 Second connecting plate
51 to 58 Grooves
H Tire width direction
TW Total width of the outer peripheral surface of tread member

## Claims

**1.** A non-pneumatic tire (1) comprising:

a mounting body (11) mountable on an axle;
a ring-shaped body (13) surrounding the mounting body (11) from an outside in a tire radial direction;
a connecting member (15) configured to connect the mounting body (11) and the ring-shaped body (13) such that the mounting body (11) and the ring-shaped body (13) are relatively and elastically displaceable; and
a cylindrical tread member (16) mounted over the ring-shaped body (13),
wherein the connecting member (15) includes a first connecting plate (21) and a second connecting plate (22) arranged at intervals in the tire width direction (H),
wherein grooves (54) are formed at an outer peripheral surface of a portion of the tread member (16) located above and corresponding to a portion of the ring-shaped body (13) at which the first and second connecting plates (21, 22) are connected;
wherein grooves (53) are formed at an outer peripheral surface of a top part of the tread member (16) which is located closest to an outer side in the tire radial direction at a central portion of the tread member (16) in the tire width direction (H) and above a gap between portions of the ring-shaped body (13) at which the first and second connecting plates (21, 22) are connected,

**characterised in that**:

the outer peripheral surface of the tread member (16) is constituted of two central curved surface parts (41) located at central portions in the tire width direction (H) and each having a radius of curvature (R1) in the cross-sectional view in the tire width direction (H), two shoulder curved surface parts (43) located at outer sides in the tire width direction (H) and each having a radius of curvature (R3) in the cross-sectional view in the tire width direction (H), and two intermediate curved surface parts (42) located between the central curved surface parts (41) and the shoulder curved surface parts (43) and each having a radius of curvature (R2) in the cross-sectional view in the tire width direction (H);
the curved surface parts (41, 42, 43) of the outer peripheral surface of the tread member (16) are connected to each other in the tire width direction (H) with no step therebetween and are formed in shapes protruding outward in the tire radial direction in the cross-sectional view in the tire width direction (H);
the curved surface parts (41, 42, 43) are formed to have different radii of curvature (R1, R2, R3) in the cross-sectional view in the tire width direction (H), and virtual circles, which form circular arcs of circumferences, of the curved surface parts (41, 42, 43) are in contact with each other at portions at which the curved surface parts (41, 42, 43) are connected to each other so that the circular arcs, which pass through the connection portions, of the curved surface parts (41, 42, 43) adjacent to each other in the tire width direction (H) at the connection portions have common tangents at the connection portions in the cross-sectional view in the tire width direction (H);
the radius of curvature (R2) of each intermediate curved surface part (42) is the largest and the radius of curvature (R3) of each shoulder curved surface part (43) is the smallest;
if, for each central curved surface part (41), a length in the tire width direction (H) from a central plane (C) of the non-pneumatic tire (1) to a portion at which the central curved surface part (41) and one of the intermediate curved surface parts (42) are connected is set to be a central length (W1), for each intermediate curved surface part (42), the length in the tire width direction (H) from the portion at which one of the central curved surface parts (41) and the intermediate curved surface part (42) are connected to a portion at which the intermediate curved surface part (42) and one of the shoulder curved surface parts (43) are connected is set to be an intermediate length (W2), for each shoulder curved surface part (43), a length in the tire width direction (H) from the portion at which one of the intermediate curved surface parts (42) and the shoulder curved surface part (43) are connected to a portion at which the shoulder curved surface part (43) and one of two side surfaces (44) of the outer peripheral surface of the tread member (16) in the tire width direction (H) are connected is set to be a shoulder length (W3);
wherein the two side surfaces (44) of the outer peripheral surface of the tread member (16) in the tire width direction (H) are surfaces which are located further outward in the tire width direction (H) than outer edges thereof, and are configured to connect the outer peripheral surface of the tread member (16) and the ring-shaped body (13) and not serving as a tread;
and, for each half a region of the tread member (16) using the central plane (C) as a boundary, a length in the tire width direction (H) from the central plane (C) to the portion at which the shoulder curved surface part (43) and the side surface (44) are connected is set to be an overall length (W4), the intermediate length (W2) is the largest and the shoulder length (W3) is the smallest, the intermediate length (W2) and the central length (W1) are substantially the same, and the central length (W1) is 2/3 or less the overall length (W4).

**2.** The non-pneumatic tire (1) according to claim 1, wherein the grooves (54) which are formed at the outer peripheral surface of the portion of the tread member (16) located above and corresponding to the portion of the ring-shaped body (13) at which the first and second connecting plates (21, 22) are connected, extend in a tire circumferential direction and are formed at an interval in the tire width direction (H), and
a ratio of a total sum of groove widths of said grooves (54) which are formed at the outer peripheral surface of the portion of the tread member (16) located above and corresponding to the portion of the ring-shaped body (13) at which the first and second connecting plates (21, 22) are connected, to a total width (TW) of the outer peripheral surface of the tread member (16) is 1/10 to 2/5.

**Patentansprüche**

1. Luftloser Reifen (1), der Folgendes umfasst:

einen Anbringungskörper (11), der an einer Achse angebracht werden kann,
einen ringförmigen Körper (13), der den Anbringungskörper (11) von einer in einer Reifenradialrichtung äußeren Seite umgibt,
ein Verbindungselement (15), das konfiguriert ist, um den Anbringungskörper (11) und den ringförmigen Körper (13) zu verbinden, so dass der Anbringungskörper (11) und der ringförmige Körper (13) verhältnismäßig und elastisch verschiebbar sind, und
ein zylindrisches Laufflächenelement (16), das über dem ringförmigen Körper (13) angebracht ist,
wobei das Verbindungselement (15) eine erste Verbindungsplatte (21) und eine zweite Verbindungsplatte (22) einschließt, die in Abständen in der Reifenbreitenrichtung (H) angeordnet sind,
wobei Rillen (54) an einer äußeren Umfangsfläche eines Abschnitts des Laufflächenelements (16) geformt sind, der oberhalb und entsprechend einem Abschnitt des ringförmigen Körpers (13), an dem die erste und die zweite Verbindungsplatte (21, 22) verbunden sind, angeordnet ist,
wobei Rillen (53) an einer äußeren Umfangsfläche eines oberen Teils des Laufflächenelements (16) geformt sind, der am nächsten zu einer in der Reifenradialrichtung äußeren Seite an einem in der Reifenbreitenrichtung (H) mittleren Abschnitt des zylindrischen Laufflächenelements (16) und oberhalb eines Spalts zwischen Abschnitten des ringförmigen Körpers (13), an denen die erste und die zweite Verbindungsplatte (21, 22) verbunden sind, angeordnet ist,
**dadurch gekennzeichnet, dass**:

die äußere Umfangsfläche des Laufflächenelements (16) aus zwei mittleren gekrümmten Oberflächenteilen (41), die an in der Reifenbreitenrichtung (H) mittleren Abschnitten angeordnet sind und jeweils in der Querschnittsansicht in der Reifenbreitenrichtung (H) einen Krümmungsradius (R1) aufweisen, zwei gekrümmten Schulter-Oberflächenteilen (43), die an in der Reifenbreitenrichtung (H) äußeren Seiten angeordnet sind und jeweils in der Querschnittsansicht in der Reifenbreitenrichtung (H) einen Krümmungsradius (R3) aufweisen, und zwei dazwischenliegenden gekrümmten Oberflächenteilen (42), die zwischen den mittleren gekrümmten Oberflächenteilen (41) und den gekrümmten Schulter-Oberflächenteilen (43) angeordnet sind und jeweils in der Querschnittsansicht in der Reifenbreitenrichtung (H) einen Krümmungsradius (R2) aufweisen, besteht,
die gekrümmten Oberflächenteile (41, 42, 43) der äußeren Umfangsfläche des Laufflächenelements (16) in der Reifenbreitenrichtung (H) ohne Stufe zwischendenselben miteinander verbunden sind und in Formen ausgebildet sind, die in der Querschnittsansicht in der Reifenbreitenrichtung (H) nach außen in der Reifenradialrichtung vorspringen,
die gekrümmten Oberflächenteile (41, 42, 43) so geformt sind, dass sie in der Querschnittsansicht in der Reifenbreitenrichtung (H) unterschiedliche Krümmungsradien (R1, R2, R3) aufweisen und virtuelle Kreise der gekrümmten Oberflächenteile (41, 42, 43), die Kreisbögen von Umfängen bilden, an Abschnitten, an denen die gekrümmten Oberflächenteile (41, 42, 43) miteinander verbunden sind, in Berührung miteinander stehen, so dass die Kreisbögen, die durch die Verbindungsabschnitte hindurchgehen, der gekrümmten Oberflächenteile (41, 42, 43), die einander an den Verbindungsabschnitten in der Reifenbreitenrichtung (H) benachbart sind, in der Querschnittsansicht in der Reifenbreitenrichtung (H) gemeinsame Tangenten an den Verbindungsabschnitten aufweisen,
der Krümmungsradius (R2) jedes dazwischenliegenden gekrümmten Oberflächenteils (42) der größte ist und der Krümmungsradius (R3) jedes gekrümmten Schulter-Oberflächenteils (43) der kleinste ist,
falls, für jeden mittleren gekrümmten Oberflächenteil (41), eine Länge in der Reifenbreitenrichtung (H) von einer mittleren Ebene (C) des luftlosen Reifens (1) bis zu einem Abschnitt, an dem der mittlere gekrümmte Oberflächenteil (41) und einer der dazwischenliegenden gekrümmten Oberflächenteile (42) verbunden sind, als eine Mittellänge (W1) festgelegt wird, für jeden dazwischenliegenden gekrümmten Oberflächenteil (42) die Länge in der Reifenbreitenrichtung (H) von dem Abschnitt, an dem einer der mittleren gekrümmten Oberflächenteile (41) und der dazwischenliegende gekrümmte Oberflächenteil (42) verbunden sind, bis zu einem Abschnitt, an dem der dazwischenliegende gekrümmte Oberflächenteil (42) und einer der gekrümmten Schulter-Oberflächenteile (43) verbunden sind, als eine Zwischenlänge (W2) festgelegt wird, für jeden gekrümmten Schulter-Oberflächenteil (43) eine Länge in der Reifenbreitenrichtung (H) von dem Abschnitt, an dem einer der dazwischenliegenden gekrümmten Oberflächenteile (42) und der gekrümmte Schulter-Oberflächenteil (43) verbunden sind, bis zu einem Abschnitt, an dem der gekrümmte Schulter-Oberflächenteil (43) und eine von zwei Seitenflächen (44) der äußeren Umfangsfläche des Laufflächenelements (16) in der Reifenbreitenrichtung (H) verbunden sind, als eine Schulterlänge (W3) festgelegt wird,

wobei die zwei Seitenflächen (44) der äußeren Umfangsfläche des Laufflächenelements (16) in der Reifenbreitenrichtung (H) Flächen sind, die in der Reifenbreitenrichtung (H) weiter nach außen angeordnet sind als äußere Kanten desselben, und konfiguriert sind, um die äußere Umfangsfläche des Laufflächenelements (16) und den ringförmigen Körper (13) miteinander zu verbinden, und nicht als eine Lauffläche dienen,

und, für jede Hälfte eines Bereichs des Laufflächenelements (16) unter Verwendung der mittleren Ebene (C) als Grenze, eine Länge in der Reifenbreitenrichtung (H) von der mittleren Ebene (C) bis zu dem Abschnitt, an dem der gekrümmte Schulter-Oberflächenteil (43) und die Seitenfläche (44) verbunden sind, als eine Gesamtlänge (W4) festgelegt wird, die Zwischenlänge (W2) die größte ist und die Schulterlänge (W3) die kleinste ist, die Zwischenlänge (W2) und die Mittellänge (W1) im Wesentlichen gleich sind und die Mittellänge (W1) 2/3 oder weniger der Gesamtlänge (W4) beträgt.

**2.** Luftloser Reifen (1) nach Anspruch 1, wobei die Rillen (54), die an der äußeren Umfangsfläche des Abschnitts des Laufflächenelements (16) geformt sind, der oberhalb und entsprechend dem Abschnitt des ringförmigen Körpers (13) angeordnet ist, an dem die erste und die zweite Verbindungsplatte (21, 22) verbunden sind, sich in einer Reifenumfangsrichtung erstrecken und in einem Abstand in der Reifenbreitenrichtung (H) geformt sind, und

ein Verhältnis einer Gesamtsumme von Rillenbreiten der Rillen (54), die an der äußeren Umfangsfläche des Abschnitts des Laufflächenelements (16) geformt sind, der oberhalb und entsprechend dem Abschnitt des ringförmigen Körpers (13) angeordnet ist, an dem die erste und die zweite Verbindungsplatte (21, 22) verbunden sind, zu einer Gesamtbreite (TW) der äußeren Umfangsfläche des Laufflächenelements (16) 1/10 bis 2/5 beträgt.

**Revendications**

**1.** Bandage pneumatique sans air (1), comprenant :

un corps de montage (11) pouvant être monté sur un essieu ;

un corps de forme annulaire (13) entourant le corps de montage (11) à partir d'un extérieur, dans une direction radiale du bandage pneumatique ;

un élément de raccordement (15) configuré pour raccorder le corps de montage (11) et le corps de forme annulaire (13), de sorte que le corps de montage (11) et le corps de forme annulaire (13) peuvent être déplacés de manière relative et élastique ; et

un élément de bande de roulement cylindrique (16) monté au-dessus du corps de forme annulaire (13) ;

dans lequel l'élément de raccordement (15) inclut une première plaque de raccordement (21) et une deuxième plaque de raccordement (22) agencées à des intervalles dans la direction de la largeur du bandage pneumatique (H) ;

dans lequel des rainures (54) sont formées au niveau d'une surface périphérique externe d'une partie de l'élément de bande de roulement (16), agencée au-dessus d'une partie du corps de forme annulaire (13) et correspondant à celle-ci, au niveau de laquelle les première et deuxième plaques de raccordement (21, 22) sont raccordées ;

dans lequel des rainures (53) sont formées au niveau d'une surface périphérique externe d'une partie supérieure de l'élément de bande de roulement (16) agencée le plus près d'un côté externe, dans la direction radiale du bandage pneumatique, au niveau d'une partie centrale de l'élément de bande de roulement (16), dans la direction de la largeur du bandage pneumatique (H), et au-dessus d'un espace entre des parties du corps de forme annulaire (13) au niveau desquelles les première et deuxième plaques de raccordement (21, 22) sont raccordées ;

**caractérisé en ce que** :

la surface périphérique externe de l'élément de bande de roulement (16) est constituée de deux parties de surface courbées centrales (41) agencées au niveau de parties centrales, dans la direction de la largeur du bandage pneumatique (H), et ayant un rayon de courbure (R1) dans la vue en section transversale, dans la direction de la largeur du bandage pneumatique (H), par deux parties de surface courbées d'épaulement (43) agencées au niveau de côtés externes, dans la direction de la largeur du bandage pneumatique (H), ayant chacune un rayon de courbure (R3) dans la vue en section transversale, dans la direction de la largeur du bandage pneumatique (H) et de deux parties de surface courbées intermédiaires (42) agencées entre les parties de surface courbées centrales (41) et les parties de surface courbées d'épaulement (43), ayant chacune un rayon de courbure (R2) dans la vue en section transversale, dans la direction de la largeur du bandage pneumatique (H) ;
les parties de surface courbées (41, 42, 43) de la surface périphérique externe de l'élément de bande de roulement (16) sont raccordées les unes aux autres dans la direction de la largeur du bandage pneumatique (H), sans gradin entre elles, et sont formées en des formes débordant vers l'extérieur dans la direction radiale du bandage pneumatique dans la vue en section transversale, dans la direction de la largeur du bandage pneumatique (H);
les parties de surface courbées (41, 42, 43) sont formées de sorte à avoir différents rayons de courbure (R1, R2, R3) dans la vue en section transversale, dans la direction de la largeur du bandage pneumatique (H), et des cercles virtuels, formant des arcs circulaires de circonférences, des parties de surface courbées (41, 42, 43) sont en contact les uns avec les autres au niveau de parties au niveau desquelles les parties de surface courbées (41, 42, 43) sont raccordées les unes aux autres, de sorte que les arcs circulaires, passant à travers les parties de raccordement, des parties de surface courbées (41, 42, 43) adjacentes les unes aux autres dans la direction de la largeur du bandage pneumatique (H) au niveau des parties de raccordement, ont des tangentes communes au niveau des parties de raccordement, dans la vue en section transversale, dans la direction de la largeur du bandage pneumatique (H) ;
le rayon de courbure (R2) de chaque partie de surface courbée intermédiaire est le plus grand, le rayon de courbure (R3) de chaque partie de surface courbée d'épaulement (43) étant le plus réduit ;
lorsque, pour chaque partie de surface courbée centrale (41), une longueur, dans la direction de la largeur du bandage pneumatique (H), d'un plan central (C) du bandage pneumatique sans air (1) jusqu'à une partie au niveau de laquelle la partie de surface courbée centrale (41) et l'une des parties de surface courbées intermédiaires (42) sont raccordées, est ajustée de sorte à constituer une longueur centrale (W1), pour chaque partie de surface courbée intermédiaire (42), la longueur, dans la direction de la largeur du bandage pneumatique (H), de la partie au niveau de laquelle l'une des parties de surface courbées centrales (41) et la partie de surface courbée intermédiaire (42) sont raccordées jusqu'à une partie au niveau de laquelle la partie de surface courbée intermédiaire (42) et l'une des parties de surface courbées d'épaulement (43) sont raccordées, est ajustée de sorte à constituer une longueur intermédiaire (W2), pour chaque partie de surface courbée d'épaulement (43), une longueur, dans la direction de la largeur du bandage pneumatique (H), de la partie au niveau de laquelle l'une des parties de surface courbées intermédiaires (42) et la partie de surface courbée d'épaulement (43) sont raccordées jusqu'à une partie au niveau de laquelle la partie de surface courbée d'épaulement (43) et l'une de deux surfaces latérales (44) de la surface périphérique externe de l'élément de bande de roulement (16), dans la direction de la largeur du bandage pneumatique (H) sont raccordés, étant ajustée de sorte à constituer une longueur d'épaulement (W3) ;
dans lequel les deux surfaces latérales (44) de la surface périphérique externe de l'élément de bande de roulement (16), dans la direction de la largeur du bandage pneumatique (H), sont des surfaces agencées davantage vers l'extérieur, dans la direction de la largeur du bandage pneumatique (H), que des bords externes de celles-ci, et sont configurées pour raccorder la surface périphérique externe de l'élément de bande de roulement (16) et le corps de forme annulaire (13), et ne servent pas de bande de roulement ;
et, pour chaque demi-région de l'élément de bande de roulement (16), en utilisant le plan central (C) comme limite, une longueur, dans la direction de la largeur du bandage pneumatique (H), du plan central (C) jusqu'à la partie au niveau de laquelle la partie de surface courbée d'épaulement (43) et la surface latérale (44) sont raccordées, est ajustée de sorte à constituer une longueur globale (W4), la longueur intermédiaire (W2) est la plus grande et la longueur d'épaulement (W3) est la plus réduite, la longueur intermédiaire (W2) et la longueur centrale (W1) sont sensiblement identiques, et la longueur centrale (W1) représente 2/3 ou moins de la longueur globale (W4).

**2.** Bandage pneumatique sans air (1) selon la revendication 1, dans lequel les rainures (54) formées au niveau de la surface périphérique externe de la partie de l'élément de bande de roulement (16) agencée au-dessus de la partie du corps de forme annulaire (13) et correspondant à celle-ci, au niveau de laquelle les première et deuxième plaques de raccordement (21, 22) sont raccordées, s'étendent dans une direction circonférentielle du bandage pneumatique et sont formées à un intervalle dans la direction de la largeur du bandage pneumatique (H), et
un rapport entre une somme totale de largeurs de rainure desdites rainures (54) formées au niveau de la surface périphérique externe de la partie de l'élément de bande de roulement (16) agencée au-dessus de la partie du corps de forme annulaire (13) et correspondant à celle-ci, au niveau de laquelle les première et deuxième plaques de raccordement (21, 22) sont raccordées, et une largeur totale (TW) de la surface périphérique externe de l'élément de bande de roulement (16) est compris entre 1/10 et 2/5.

32
24 (13)
22 (15)
26 (12)
31
23 (13)
21 (15)
25 (12)
1
11
18
18d
18a
17
12a
16
O
18c
51
52
28
28a
12a
18b
18a
22b
21b
18c
18d
19a
18d
19
28
28a
22a
21a
H

FIG. 1

1
O
16
25(12)
23(13)
31
15
21
22
28
18
17
11
19
19a
21b
22b
22a
21a
21
22
15


FIG. 2

1
O
L
11
17
19
18
19a
28
25 (12)
21b
22b
21f
22f
21h
22h
21d
22d
21g
22g
23 (13)
21e
21a
22a
22e
16
21
22
15

FIG. 3

12
21b, 22b
21f, 22f
21h, 22h
21, 22
21d, 22d
21g, 22g
21e, 22e
21a, 22a
13

FIG. 4

13
24
23
16
22(15)
21(15)
22b
21b
32
31
12
26
25
12a
21a
22a
52
51
H

FIG. 5

31, 32
21 (15) , 22 (15)
23 (13) , 24 (13)
25 (12) , 26 (12)
O
12a
21b, 22b
12a
21a, 22a

FIG. 6

TW
C
1
13
16
24
23
P
P
44
51
52
52
51
22a
21a
22
(15)
21
(15)
22b
26
25
21b
C2
12
C1
H

FIG. 7

TW
C
W4
1
W3
W2
W1
13
24
23
16
44
43
42
54
P
41
53
P
54
22a
21a
22
(15)
21
(15)
R3
R2
R1
22b
26
25
21b
C2
12
C1
H

FIG. 8

TW
C
1
W4
W3
W2
W1
13
16
24
23
44
43
42
55
41
56
P
P
56
55
22a
21a
22
(15)
21
(15)
R3
R2
R1
22b
26
25
21b
C2
12
C1
H


FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013086712 A
- JP 2013112045 A
- WO 2010007636 A
- EP 0245789 A
- JP 2014083871 A
- WO 2005063505 A